# EUROPÄISCHE PATENTSCHRIFT

(11) **EP 3 066 806 B1**
(45) Veröffentlichungstag und Bekanntmachung des Hinweises auf die Patenterteilung: **03.04.2019**
(21) Anmeldenummer: 14786878.0
(22) Anmeldetag: 20.10.2014
(51) Int. Cl.: H04L 25/02

(54) **TEILNEHMERSTATION FÜR EIN BUSSYSTEM UND VERFAHREN ZUR REDUZIERUNG VON LEITUNGSGEBUNDENEN EMISSIONEN IN EINEM BUSSYSTEM**
SUBSCRIBER STATION FOR A BUSSYSTEM AND METHOD FOR REDUCTION OF ELECTROMAGNETIC EMISSIONS IN A BUSSYSTEM
POSTE DU RÉSEAU D'UN SYSTÈME DE BUS ET PROCÉDÉ POUR LA RÉDUCTION D'ÉMISSIONS ÉLECTROMAGNÉTIQUES DANS UN SYSTÈME DE BUS

(30) Priorität: 08.11.2013 DE 102013222786
(43) Veröffentlichungstag der Anmeldung: 14.09.2016
(73) Patentinhaber: Robert Bosch GmbH, 70442 Stuttgart (DE)
(72) Erfinder: WALKER, Steffen, 72770 Reutlingen (DE); PANNWITZ, Axel, 01445 Radebeul (DE); HEHEMANN, Ingo, 49170 Hagen A.T.W (DE); HILGENBERG, Bernd, 72760 Reutlingen (DE)
(86) Internationale Anmeldenummer: PCT/EP2014/072415
(87) Internationale Veröffentlichungsnummer: WO 2015/067459

(56) Entgegenhaltungen:
- WO-A1-92/17017
- WO-A2-99/57810
- DE-A1-102004 056 305

## Beschreibung

### Technisches Gebiet

Die vorliegende Erfindung betrifft eine Teilnehmerstation für ein Bussystem und ein Verfahren zur Reduzierung von leitungsgebundenen Emissionen in einem Bussystem, um die Anforderungen des Bussystems an die Signalsymmetrierung zu erfüllen.

### Stand der Technik

Der CAN-Bus ist ein differentielles Bussystem mit hohen Anforderungen an die Signalsymmetrierung. Hierbei gilt, je besser die Signalsymmetrierung desto geringer die Störabstrahlung und die Störungen bei einer Teilnehmerstation, wie beispielsweise einem Autoradio. Die gegenphasigen Signale CAN_H und CAN_L müssen derart gesteuert werden, dass ihr Mittelwert möglichst wenig von der Mittenspannung VCC5/2=2.5V abweicht.

Derzeit wird die Signalsymmetrierung dadurch erzielt, dass die Widerstände der Schalter nach Masse GND und zum Potential VCC5 so balanciert werden, dass im Dominantzustand des Busses, bei welchem die Differenzspannung der Signale CAN_H - CAN_L einen Wert von ca. 2V hat, die Mittelwertspannung bei 2.5V liegt. Das Ausbalancieren der Schalterwiderstände geschieht beispielsweise durch geschickte Dimensionierung, durch Abgleich oder durch Regelschaltungen, die beispielsweise in der DE10250576A1 beschrieben sind.

Problematisch ist jedoch, dass die Symmetrierung während des Schaltvorgangs nur mangelhaft ist, da ein Schalter nach VCC5 (Pull-Up-Schalter) und ein Schalter nach GND (Pull-Down-Schalter, GND = Ground = Masse) unterschiedliche Charakteristiken aufweisen. Die Summenspannung zeigt im Umschaltmoment Spannungsspitzen (Spikes) die zu schlechtem Abstrahlverhalten im Hochfrequenzbereich, einem Bereich über 1 MHz, führen. Im Stand der Technik werden diese störenden Spannungsspitzen durch eine Gleichtaktdrossel (common mode choke) unterdrückt. Eine solche Gleichtaktdrossel ist jedoch ein zusätzliches Bauteil, welches Kosten verursacht und zusätzlichen Platz benötigt, der meist nur sehr begrenzt verfügbar ist.

WO 99/57810 A2 offenbart einen CAN-Bus-Treiber mit symmetrischen Differenzspannungsausgangssignalen und mit einem Stromspiegel, der mit dem CAN-Bus nicht über MOS- Hochspannungs-Transistoren verbunden ist.

WO 92/17017 A1 bezieht sich auf eine Senderendstufe mit monolitisch integrierten Schaltelementen, die Kurzschlüsse der Datenleitungen gegen Masse oder gegen die Versorgungsspannungen minimiert und Daten mit hoher Datenrate überträgt.

### Offenbarung der Erfindung

Daher ist es Aufgabe der vorliegenden Erfindung, eine Teilnehmerstation für ein Bussystem und ein Verfahren bereitzustellen, welche die zuvor genannten Probleme lösen. Insbesondere sollen eine Teilnehmerstation für ein Bussystem und ein Verfahren bereitgestellt werden, bei welchen eine Symmetrierung im Schaltvorgang, eine signifikante Verringerung der abgestrahlten Störungen, ein Betrieb ohne Gleichtaktdrossel und eine Symmetrierung des Dominant-Buszustandes möglich ist.

Die Aufgabe wird durch eine Teilnehmerstation für ein Bussystem nach Patentanspruch 1 gelöst. Die Teilnehmerstation umfasst eine Flankensteuerung zur Symmetrierung von Schaltflanken im Bussystem, wobei die Flankensteuerung ein Element zur Erzeugung des Sollspannungsverlaufs auf einem Bus des Bussystems und einen Stromspiegel zum Übertragen des erzeugten Sollspannungsverlaufs an den Bus aufweist, wobei der Stromspiegel mit dem Bus über MOS-Hochspannungs-Transistoren verbunden ist.

Mit der Teilnehmerstation ist eine bessere Kontrolle der Ströme in CAN_H und CAN_L des Bussystems statisch und während der Schaltflanken bei einem Umschalten vom dominanten zum rezessiven Zustand und umgekehrt möglich.

Ferner hat die Teilnehmerstation eine hohe Immunität bei eingestrahlten Störungen, was sich durch einen DPI-Test (DPI = Direct Power Injection = Direkte Energieeinstrahlung), einen BCI-Test (BCI = Bulk Current Injection = Stromeinprägung in den Kabelbaum) nachweisen lässt. Die bekannten Gleichricht- und Speichereffekte gehören der Vergangenheit an.

Zudem ist mit der Teilnehmerstation eine Abgleichbarkeit der Symmetrierung im IC-Endtest (IC = Integrated Circuit = Integrierte Schaltung) realisierbar, was die OTP-Programmierung (OTP =One Time Programmable (Memory) = einmal programmierbar(er Speicher)) betrifft. Eine OTP-Programmierung wird zum Parameter- und Funktionsabgleich der ICs verwendet.

Ein weiterer Vorteil der Teilnehmerstation besteht darin, dass ein Betrieb ohne Gleichtaktdrossel möglich wird.

Vorteilhafte weitere Ausgestaltungen der Teilnehmerstation sind in den abhängigen Patentansprüchen angegeben.

Beispielsweise kann das Element zur Erzeugung des Sollspannungsverlaufs einen Millerkondensator umfassen, der auf der einen Seite an einen PMOS-Transistor und auf der anderen Seite an einen Widerstand angeschlossen ist, wie in den Ansprüchen beschrieben.

Es ist auch möglich, dass das Element zur Erzeugung des Sollspannungsverlaufs zwei Stromquellen umfasst, die an einen PMOS-Transistor angeschlossen sind.

Gemäß einer Ausgestaltung der Erfindung umfasst die Flankensteuerung zwei Stromquellen, einen Millerkondensator, einen PMOS-Transistor und einen Widerstand. Hierbei können die zwei Stromquellen und der Millerkondensator an dem Gate des PMOS-Transistors angeschlossen sein, wie in den Ansprüchen beschrieben.

Möglicherweise ist der Stromspiegel mit im Layout identisch aufgebauten MOS-Niederspannungs-Transistoren gebildet.

Wie zuvor beschrieben, ist der Stromspiegel mit dem Bus über MOS- Hochspannungs-Transistoren verbunden. Die MOS- Hochspannungs-Transistoren sind Kaskoden-Transistoren, mit welchen eine weitgehende Abtrennung der Schaltung der Flankensteuerung vom Bus erreicht wird.

Die Teilnehmerstation kann zudem eine Verpolschutzdiode zum Schutz der Schaltung gegen ein Potential des dominanten Pegels im Bussystem und einer Verpolschutzdiode gegen das Signal CAN-L aufweisen.

Die zuvor beschriebene Teilnehmerstation kann Teil eines Bussystems sein, das einen Bus, und mindestens zwei Teilnehmerstationen aufweist, welche über den Bus derart miteinander verbunden sind, dass sie miteinander kommunizieren können, wobei mindestens eine der mindestens zwei Teilnehmerstationen eine der zuvor beschriebenen Teilnehmerstation ist.

Die zuvor genannte Aufgabe wird zudem durch ein Verfahren zur Reduzierung von leitungsgebundenen Emissionen in einem Bussystem nach Patentanspruch 9 gelöst. Bei dem Verfahren erzeugt eine Flankensteuerung zur Symmetrierung von Schaltflanken im Bussystem einen Sollspannungsverlauf auf dem Bus mit einem Element zur Erzeugung des Sollspannungsverlaufs und überträgt diesen über einen Stromspiegel zum Bus, wobei der Stromspiegel mit dem Bus über MOS- Hochspannungs-Transistoren verbunden ist.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 einen Sollspannungsverlauf eines Bussignals über der Zeit im Bussystem gemäß dem ersten Ausführungsbeispiel; und
Fig. 3 ein elektrisches Schaltbild einer Signalsymmetrierungseinrichtung einer Teilnehmerstation des Bussystems gemäß dem ersten Ausführungsbeispiel;

In den Figuren sind gleiche oder funktionsgleiche Elemente, sofern nichts anderes angegeben ist, mit denselben Bezugszeichen versehen.

### Beschreibung der Ausführungsbeispiele

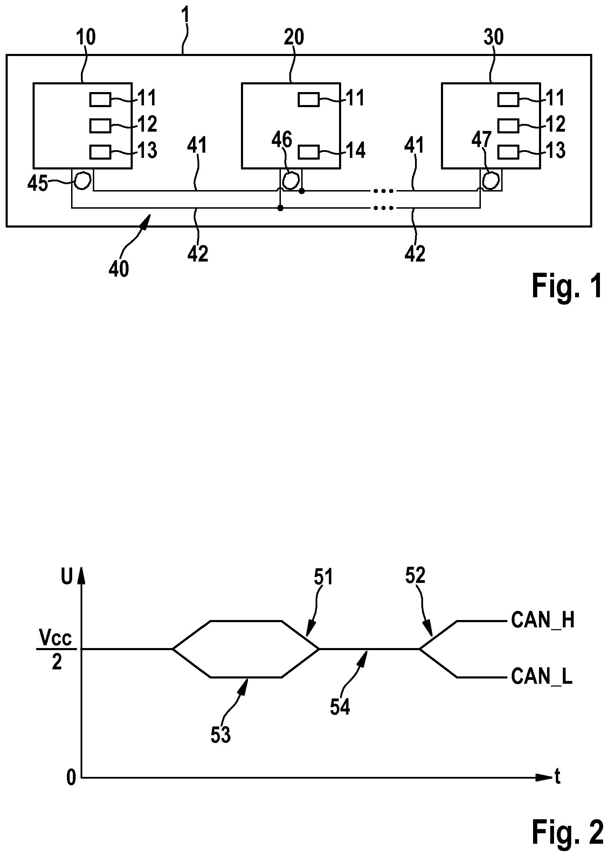

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur Einkopplung der dominanten Pegel im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11, eine Sendeeinrichtung 12, und eine Empfangseinrichtung 13. Die Teilnehmerstation 20 hat dagegen eine Kommunikationssteuereinrichtung 11 und eine Sende-/Empfangseinrichtung 14. Die Sendeeinrichtungen 12, die Empfangseinrichtungen 13 der Teilnehmerstationen 10, 30 und die Sende-/Empfangseinrichtung 14 der Teilnehmerstationen 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Sendeeinrichtung 12 dient zum Senden der Nachrichten 45, 47 in Form von Signalen und zur Reduzierung von leitungsgebundenen Emissionen im Bussystem 1, um die Anforderungen des Bussystems 1 an die Signalsymmetrierung zu erfüllen, wie später noch ausführlicher beschrieben. Leitungsgebundene Emissionen können auf dem Bus 40 auftreten. Die Kommunikationssteuereinrichtung 11 kann wie ein herkömmlicher CAN-Controller ausgeführt sein. Die Empfangseinrichtung 13 kann in Bezug auf ihre Empfangsfunktionalität wie ein herkömmlicher CAN-Transceiver ausgeführt sein. Die Sende-/Empfangseinrichtung 14 kann wie ein herkömmlicher CAN-Transceiver ausgeführt sein.

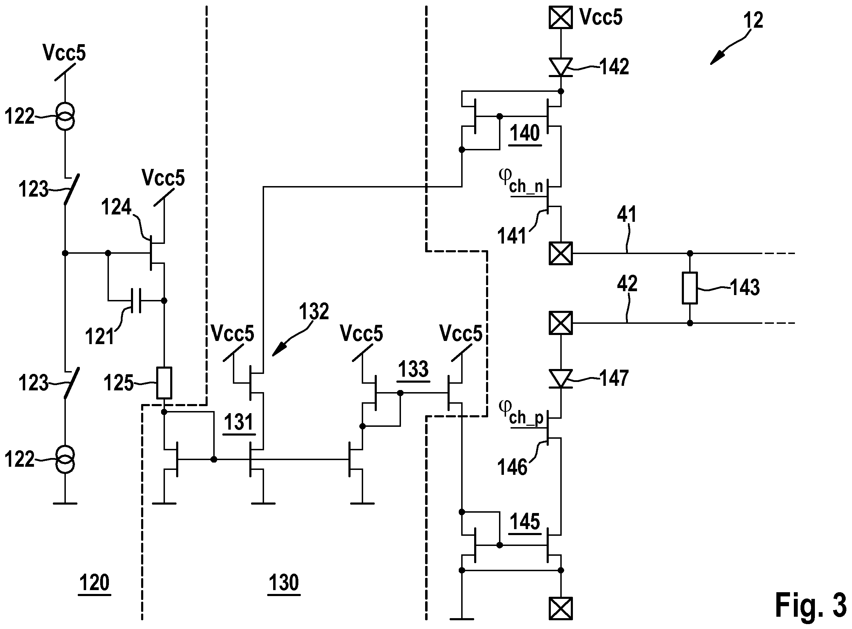

Fig. 2 zeigt einen Spannungsverlauf U über der Zeit t mit Schaltflanken 51, 52, wie er von der Sendeeinrichtung 12 erzeugt wird, die in Fig. 3 genauer dargestellt ist. Die Schaltflanke 51 entspricht einem Übergang des Signals vom dominanten Zustand 53 zum rezessiven Zustand 54. Die Schaltflanke 52 entspricht einem Übergang des Signals vom rezessiven Zustand 54 zum dominanten Zustand 53. Der dargestellte Spannungsverlauf hat Schaltflanken 51, 52, wie ein von der Sendeeinrichtung 12 zu erzeugender Sollspannungsverlauf.

Gemäß Fig. 3 umfasst die Sendeeinrichtung 12 eine Flankensteuerung 120 mittels einer Nachbildung eines Millerkondensators 121 und Stromquellen 122, einen nahezu verzögerungsfreien Stromspiegel 130, einen Ausgangsstromspiegel CAN_H 140 und einen Ausgangsstromspiegel CAN_L 145.

Die Flankensteuerung 120 umfasst zusätzlich zum Millerkondensator 121 und den Stromquellen 122 noch Schaltelemente 123 und einen PMOS-Transistor 124. An dem Gate des PMOS-Transistors 124 ist der Millerkondensator 121 angeschlossen. Zudem sind an dem Gate des PMOS-Transistors 124 die Stromquellen 122 über die Schaltelemente 123 angeschlossen. Der MillerKondensator 121 ist an seiner anderen Seite mit dem Drain des PMOS-Transistors 124 verbunden. Ein Widerstand 125 wandelt die erzeugte Spannungsrampe am Drain des PMOS-Transistors 124 in ein Stromsignal für den Eingang eines Stromspiegels 131. Dabei gibt der Widerstand 125 den maximalen Kurzschlussstrom in der Busader 41 (CAN_H) und der Busader 42 (CAN_L.) vor.

Der Stromspiegel 130 umfasst zusätzlich zu der NMOS-Strombank 131 zudem eine NMOS-Hochspannungs-Kaskode 132, die nachfolgend auch NMOS-HV-Kaskode 132 genannt ist, und einen PMOS-Stromspiegel 133 für Niederspannung (low voltage). Die NMOS-HV-Kaskode 132 ist mit dem Ausgangsstromspiegel 140 verbunden. Der PMOS-Stromspiegel 133 ist mit dem Ausgangsstromspiegel 145 verbunden. Der Ausgangsstromspiegel CAN_H 140 ist ein PMOS-Stromspiegel für Niederspannung (low voltage) zur CAN_H Ausgangstromerzeugung. Der Ausgangsstromspiegel CAN_L 145 ist ein NMOS-Stromspiegel für Niederspannung (low voltage) zur CAN_L Ausgangstromerzeugung.

An den Ausgangsstromspiegel CAN_H 140 ist eine PMOS-Hochspannungs-Kaskode 141, die nachfolgend auch PMOS-HV-Kaskode 141 genannt ist, angeschlossen. Die PMOS-HV-Kaskode 141 wird für einen Fehlerfall "Kurzschluss von CAN_H gegen -27 V" benötigt. Darüber hinaus ist an den Ausgangsstromspiegel CAN_H 140 eine Verpolschutzdiode 142 zum Schutz der Schaltung gegen positive Überspannung von CAN_H angeschlossen. An die PMOS-HV-Kaskode 141 wird ein negatives Potential ϕch_n bezogen zu der positiven Spannungsversorgung hinter der Verpolschutzdiode 142 angelegt.

An den Ausgangsstromspiegel CAN_L 145 ist eine NMOS-Hochspannungs-Kaskode 146, die nachfolgend auch NMOS-HV-Kaskode 146 genannt ist, angeschlossen. Die NMOS-HV-Kaskode 146 wird für einen Fehlerfall "Kurzschluss CAN_L gegen 40 V benötigt. Darüber hinaus ist an den Ausgangsstromspiegel CAN_L 145 eine Verpolschutzdiode 147 angeschlossen. Die Verpolschutzdiode 147 wird im Fehlerfall "Kurzschluss CAN_L gegen -27 V" benötigt. An die NMOS-HV-Kaskode 146 wird ein positives Potential ϕch_p bezogen auf Masse angelegt.

Zwischen der PMOS-HV_Kaskode 141 und der Verpolschutzdiode 147 ist der Bus 40 mit den Busadern 41, 42 geschaltet, welche mit dem Widerstand 143abgeschlossen sind. Somit hat der Widerstand 143 den gleichen Widerstand wie der Wellenwiderstand des Busses 40, weshalb es zu keinen Reflexionen auf dem Bus 40 kommt. Hierbei steht die Busader 41 für die Übertragung des Signals CAN_H und die Busader 42 für die Übertragung des Signals CAN_L.

Die zuvor beschriebene Schaltung ist in Bezug auf den Widerstand 143 stark vereinfacht. In der Realität sind an jedem Leitungsende der Busadern 41, 42 je zwei in Serie geschaltete 60 Ω Widerstände zum Abschluss vorhanden. Der jeweilige Mittelpunkt wird auf 2,5 V festgelegt.

Bei der Sendeeinrichtung 12 von Fig. 3 wird der Sollspannungsverlauf auf dem Bus 40 intern mittels eines Replikaelements, das den Millerkondensator 121, die Stromquellen 122, den PMOS-Transistor 124 und den Widerstand 125 umfasst, erzeugt und dann über die Stromspiegel 140, 145, zum Bus 40 übertragen. Die Flankensteuerung wird mit dem Millerkondensator 121, den Stromquellen 122, dem PMOS-Transistor 124 und dem Widerstand 125 erzielt. Die Stromspiegel 133, 140, 145 sind mit im Layout identisch aufgebauten MOS- Niederspannungs-Transistoren gebildet, um gleiche Signalverzögerungen sowie gleiches Sättigungsverhalten im CAN_H- und CAN_L-Zweig der in Fig. 3 gezeigten Schaltung zu erhalten.

Mit der Flankensteuerung 120 wird also ein Verfahren zur Reduzierung von leitungsgebundenen Emissionen in dem Bussystem 1 ausgeführt. Hierbei erzeugt die Flankensteuerung 120 zur Symmetrierung von Schaltflanken im Bussystem 1 einen Sollspannungsverlauf auf dem Bus 40 mit einem Element zur Erzeugung des Sollspannungsverlaufs und überträgt diesen über den Stromspiegel 130 zum Bus 40.

Die benötigte Spannungsfestigkeit wird mittels Kaskodestufen erreicht, die aus MOS- Hochspannungs-Transistoren gebildet sind, nämlich den Kaskoden 132, 141, 146.

Wie aus Fig. 3 ersichtlich, ist die Schaltung der Flankensteuerung 120 weitgehend vom Bus 40 getrennt, der durch die Busadern 41, 42 und den Widerstand 143 repräsentiert wird. Dieser Vorteil wird durch die kaskoden Transistoren erzielt, nämlich die Kaskoden 132, 141, 146. Damit werden eingestrahlte Störungen, wie durch DPI, BCI, etc., von empfindlichen Blöcken, wie der Flankensteuerung 120 ferngehalten. Die bekannten Gleichricht- und Speichereffekte gehören der Vergangenheit an.

Somit sind durch die Flankensteuerung 120 während der Schaltvorgänge auf dem Bus 40, also von rezessiv nach dominant oder umgekehrt, gleiche Ströme an CAN_H u. CAN_L vorhanden. Dadurch hat man ideale oder nahezu ideale Schaltvorgänge bei gleichem Innenwiderstand an CAN_H, der Busader 41, und CAN_L, der Busader 42. Die Stromquellen 122, der Millerkondensator 121 über dem PMOS-Transistor 124 und der Widerstand 125 sind so auf das Schaltverhalten in Kombination mit dem Bus 40 abgestimmt, dass nur geringe Gleichtaktstörungen entstehen.

Gemäß einem zweiten Ausführungsbeispiel wird der dominante Buszustand symmetriert, welcher dem dominanten Zustand 53 entspricht. Genauer gesagt, wird das Verhältnis der Ströme in Richtung des Ausgangsstromspiegels CAN_H 140 und des Ausgangsstromspiegels CAN_L 145 abgeglichen Damit können Stromfehler in unterschiedlichen Signalpfaden vermieden werden, die aufgrund von Bauelemente-Fehlanpassung (Bauelemente-Mismatch) auftreten können. Vorteilhafterweise bildet man die NMOS-Strombank 131 abgleichbar aus. Ansonsten ist das Bussystem 1 aufgebaut, wie bei dem ersten Ausführungsbeispiel beschrieben.

Alle zuvor beschriebenen Ausgestaltungen des Bussystems 1, der Teilnehmerstationen 10, 30, der Sendeeinrichtung 12 und des Verfahrens können einzeln oder in allen möglichen Kombinationen Verwendung finden. Insbesondere ist eine beliebige Kombination der Merkmale der Ausführungsbeispiele möglich. Zusätzlich sind insbesondere folgende Modifikationen denkbar.

Das Bussystem 1 gemäß den Ausführungsbeispielen ist insbesondere ein CAN-Netzwerk oder ein CAN FD-Netzwerk oder ein FlexRay-Netzwerk.

Die Anzahl und Anordnung der Teilnehmerstationen 10, 20, 30 in dem Bussystem 1 der Ausführungsbeispiele ist beliebig. Insbesondere können auch nur Teilnehmerstationen 10 oder nur Teilnehmerstationen 30 oder nur Teilnehmerstationen 10, 30 in dem Bussystem 1 der Ausführungsbeispiele vorhanden sein.

Die zuvor beschriebenen Teilnehmerstationen 10, 30 und das von ihnen ausgeführte Verfahren kann besonders vorteilhaft bei einem modifizierten Datenprotokoll angewendet werden, welches am 02.05.2011 auf der Internet-Seite http://www.semiconductors.bosch.de/veröffentlichte Dokument "CAN with Flexible Data-Rate, White Paper, Version 1.0" veröffentlicht wurde und welches unter anderem eine Vergrößerung des Datenfeldes sowie für einen Teil der CAN-Nachricht nach erfolgter Arbitrierung eine Verkürzung der Bitlänge ermöglicht.

Die Teilnehmerstationen 10, 30 stellen besonders für CAN-FD eine Möglichkeit dar, die Sendegüte von CAN-FD in den Bereich von üblichen CAN Übertragungen bei Nutzung einer deutlich höheren Datenrate anzuheben.

Die Funktionalität der zuvor beschriebenen Ausführungsbeispiele lässt sich auch in einem Transceiver bzw. einer Sende-/Empfangseinrichtung 13 oder in einer Kommunikationssteuereinrichtung 11 usw. umsetzen. Zusätzlich oder alternativ kann die Sendeeinrichtung 12 in existierende Produkte integriert werden.

## Patentansprüche

1. Teilnehmerstation (10; 30) für ein differentielles Bussystem (1), mit
einer Flankensteuerung (120) zur Symmetrierung von Schaltflanken im Bussystem (1),
wobei die Flankensteuerung (120) aufweist
ein Element (121, 122, 124, 125) zur Erzeugung des Sollspannungsverlaufs auf einem Bus (40) des Bussystems (1) und
einen Stromspiegel (130) zum Übertragen des erzeugten Sollspannungsverlaufs an den Bus (40), **gekennzeichnet dadurch, dass** der Stromspiegel (130) mit dem Bus (40) über MOS-Hochspannungs-Transistoren (141, 146) verbunden ist.

2. Teilnehmerstation (10; 30) nach Anspruch 1, wobei das Element (121, 122, 124, 125) zur Erzeugung des Sollspannungsverlaufs einen Millerkondensator (121) umfasst, der auf der einen Seite an dem Gate eines PMOS-Transistors (124) und auf der anderen Seite an dem Drain des PMOS-Transistors (124) und einen Widerstand (125) angeschlossen ist.

3. Teilnehmerstation (10; 30) nach Anspruch 1 oder 2, wobei das Element (121, 122, 124, 125) zur Erzeugung des Sollspannungsverlaufs zwei Stromquellen (122) umfasst, die an einen PMOS-Transistor (124) angeschlossen sind.

4. Teilnehmerstation (10; 30) nach einem der vorangehenden Ansprüche, wobei die Flankensteuerung (120) zwei Stromquellen (122), einen Millerkondensator (121), einen PMOS-Transistor (124) und einen Widerstand (125) umfasst.

5. Teilnehmerstation (10; 30) nach Anspruch 4, wobei die zwei Stromquellen (122) und eine Seite des Millerkondensators (121) an dem Gate des PMOS-Transistors (124) angeschlossen sind und der Millerkondensator (121) auf der anderen Seite an dem Drain des PMOS-Transistors (124) und einen Widerstand (125) angeschlossen ist.

6. Teilnehmerstation (10; 30) nach einem der vorangehenden Ansprüche, wobei der Stromspiegel (130) mit im Layout identisch aufgebauten MOS- Niederspannungs-Transistoren gebildet ist.

7. Teilnehmerstation (10; 30) nach einem der vorangehenden Ansprüche, zudem mit einer Verpolschutzdiode (142) zum Schutz der Schaltung gegen ein Potential des dominanten Pegels im Bussystem (1) und einer Verpolschutzdiode (147) gegen das Signal CAN-L.

8. Bussystem (1), mit
einem Bus (40), und
mindestens zwei Teilnehmerstationen (10, 20, 30), welche über den Bus (40) derart miteinander verbunden sind, dass sie miteinander kommunizieren können,
wobei mindestens eine der mindestens zwei Teilnehmerstationen (10, 20, 30) eine Teilnehmerstation (10; 30) nach einem der vorangehenden Ansprüche ist.

9. Verfahren zur Reduzierung von leitungsgebundenen Emissionen in einem differentiellen Bussystem (1), wobei eine Flankensteuerung (120) zur Symmetrierung von Schaltflanken im Bussystem (1) einen Sollspannungsverlauf auf einem Bus (40) des Bussystems (1) mit einem Element (121, 122, 124, 125) zur Erzeugung des Sollspannungsverlaufs erzeugt und diesen über einen Stromspiegel (130) zum Bus (40) überträgt, **dadurch gekennzeichnet dass** der Stromspiegel (130) mit dem Bus (40) über MOS- Hochspannungs-Transistoren (141, 146) verbunden ist.

## Claims

1. Subscriber station (10; 30) for a differential bus system (1), having
an edge controller (120) for balancing switching edges in the bus system (1),
wherein the edge controller (120) has
an element (121, 122, 124, 125) for producing the setpoint voltage characteristic on a bus (40) of the bus system (1) and
a current mirror (130) for transmitting the setpoint voltage characteristic produced to the bus (40), **characterized in that**
the current mirror (130) is connected to the bus (40) via MOS high-voltage transistors (141, 146).

2. Subscriber station (10; 30) according to Claim 1, wherein the element (121, 122, 124, 125) for producing the setpoint voltage characteristic comprises a Miller capacitor (121), one end of which is connected to the gate of a PMOS transistor (124) and the other end of which is connected to the drain of the PMOS transistor (124) and to a resistor (125).

3. Subscriber station (10; 30) according to Claim 1 or 2, wherein the element (121, 122, 124, 125) for producing the setpoint voltage characteristic comprises two current sources (122) connected to a PMOS transistor (124).

4. Subscriber station (10; 30) according to one of the preceding claims, wherein the edge controller (120) comprises two current sources (122), a Miller capacitor (121), a PMOS transistor (124) and a resistor (125).

5. Subscriber station (10; 30) according to Claim 4, wherein the two current sources (122) and one end of the Miller capacitor (121) are connected to the gate of the PMOS transistor (124), and the other end of the Miller capacitor (121) is connected to the drain of the PMOS transistor (124) and to a resistor (125).

6. Subscriber station (10; 30) according to one of the preceding claims, wherein the current mirror (130) is formed using MOS low-voltage transistors of identical layout design.

7. Subscriber station (10; 30) according to one of the preceding claims, also having a polarity reversal protection diode (142) for protecting the circuit from a potential of the dominant level in the bus system (1) and a polarity reversal protection diode (147) for protection from the signal (CAN-L).

8. Bus system (1), having
a bus (40), and
at least two subscriber stations (10, 20, 30) connected to one another via the bus (40) such that they can communicate with one another,
wherein at least one of the at least two subscriber stations (10, 20, 30) is a subscriber station (10; 30) according to one of the preceding claims.

9. Method for reducing line-conducted emissions in a differential bus system (1), wherein an edge controller (120) for balancing switching edges in the bus system (1) produces a setpoint voltage characteristic on a bus (40) of the bus system (1) using an element (121, 122, 124, 125) for producing the setpoint voltage characteristic and transmits the latter to the bus (40) via a current mirror (130), **characterized in that** the current mirror (130) is connected to the bus (40) via MOS high-voltage transistors (141, 146).

## Revendications

1. Poste d'abonné (10 ; 30), destiné à un système de bus différentiel (1), comportant
une commande de fronts (120) servant à symétriser des fronts de commutation dans le système de bus (1),
dans lequel la commande de fronts (120) comporte un élément (121, 122, 124, 125) servant à générer la courbe de tension théorique sur un bus (40) du système de bus (1) et
un miroir de courant (130) servant à transmettre la courbe de tension théorique générée au bus (40), **caractérisé en ce que** le miroir de courant (130) est relié au bus (40) par l'intermédiaire de transistors MOS haute tension (141, 146).

2. Poste d'abonné (10 ; 30) selon la revendication 1, dans lequel l'élément (121, 122, 124, 125) servant à générer la courbe de tension théorique comprend un condensateur de Miller (121) qui est connecté d'un côté à la grille d'un transistor PMOS (124) et de l'autre côté au drain du transistor PMOS (124), et une résistance (125) .

3. Poste d'abonné (10 ; 30) selon la revendication 1 ou 2, dans lequel l'élément (121, 122, 124, 125) servant à générer la courbe de tension théorique comprend deux sources de courant (122) qui sont connectées à un transistor PMOS (124).

4. Poste abonné (10 ; 30) selon l'une des revendications précédentes, dans lequel la commande de fronts (120) comprend deux sources de courant (122), un condensateur de Miller (121), un transistor PMOS (124) et une résistance (125).

5. Poste d'abonné (10 ; 30) selon la revendication 4, dans lequel les deux sources de courant (122) et un côté du condensateur de Miller (121) sont connectés à la grille du transistor PMOS (124) et le condensateur de Miller (121) est connecté de l'autre côté au drain du transistor PMOS (124) et à une résistance (125).

6. Poste d'abonné (10 ; 30) selon l'une des revendications précédentes, dans lequel le miroir de courant (130) est formé de transistors MOS basse tension agencés de manière identique.

7. Poste d'abonné (10 ; 30) selon l'une des revendications précédentes, comprenant en outre une diode de protection contre les inversions de polarité (142) pour protéger le circuit contre un potentiel du niveau dominant du système de bus (1) et une diode de protection contre les inversions de polarité (147) du signal CAN-L.

8. Système de bus (1) comprenant
un bus (40), et
au moins deux postes d'abonnés (10, 20, 30) qui sont reliés entre eux par le bus (40) de manière à pouvoir communiquer entre eux,
dans lequel au moins l'un desdits au moins deux postes d'abonnés (10, 20, 30) est un poste d'abonné (10 ; 30) selon l'une des revendications précédentes.

9. Procédé de réduction des émissions par conduction dans un système de bus différentiel (1), dans lequel une commande de fronts (120) servant à symétriser des fronts de commutation dans le système de bus (1) génère une courbe de tension théorique sur un bus (40) du système de bus (1) comportant un élément (121, 122, 124, 125) servant à générer la courbe de tension théorique et transmet celle-ci au bus (40) par l'intermédiaire d'un miroir de courant (130),
**caractérisé en ce que** le miroir de courant (130) est relié au bus (40) par l'intermédiaire de transistors MOS haute tension (141, 146).
